Europäisches Patentamt

European Patent Office

Office européen des brevets

(19)

(11) Numéro de publication:

**0 192 595**

**A1**

(12)

# DEMANDE DE BREVET EUROPEEN

(21) Numéro de dépôt: 86450005.3

(22) Date de dépôt: 30.01.86

(51) Int. Cl.⁴: **G06K 19/06** , G06K 7/016

(30) Priorité: 30.01.85 FR 8501394

(43) Date de publication de la demande:
**27.08.86 Bulletin 86/35**

(84) Etats contractants désignés:
AT BE CH DE FR GB IT LI LU-NL SE

(71) Demandeur: **Bonnaval-Lamothe, Michel**
**Côte-Belle**
**F-33410 Cadillac sur Garonne(FR)**

(72) Inventeur: **Bonnaval-Lamothe, Michel**
**Côte-Belle**
**F-33410 Cadillac sur Garonne(FR)**

(74) Mandataire: **Thébault, Jean-Louis**
**Cabinet Jean-Louis Thébault 50, Cours de Verdun**
**F-33000 Bordeaux(FR)**

(54) **Procédé et dispositif de transmission d'informations codées.**

(57) Le procédé de transmission d'informations codées est caractérisé en ce qu'il consiste à appliquer ou incorporer, sur un support quelconque,une séquence (8) de m paquets d'emplacements de caractères ou signes comportant chacun un même nombre n d'emplacements occupés ou non par l'un de p caractères ou signes prédéterminés, chaque combinaison de ces p caractères correspondant à un nombre, une lettre ou signe, ou groupe de lettres ou signes quelconques, selon une loi de codage prédéterminée incorporant dans l'information codée une horloge codée et à restituer cette information par lecture de la séquence (8) à partir d'un étalon de temps correspondant à ladite horloge codée.
Application au codage d'informations.

EP 0 192 595 A1

Rank Xerox

## PROCEDE ET DISPOSITIF DE TRANSMISSION D'INFORMATIONS CODEES

La présente invention a trait à un nouveau procédé de transmission d'informations codées et, plus précisément, à un procédé permettant d'appliquer ou incorporer sur un support quelconque une information quelconque codée de manière à incorporer son propre rythme ou horloge de lecture.

Le but de l'invention est de proposer un système de transmission d'informations codées particulièrement fiable et sûr, et susceptible d'être mis en oeuvre, au niveau de la nature du moyen de codage, de manière extrêmement simple et peu coûteuse, en particulier en recourant à des caractères ou signes universellement utilisés tels que des caractères d'un alphabet par exemple.

A cet effet, l'invention a pour objet un procédé de transmission d'informations codées, caractérisé en ce qu'il consiste, d'une part, à appliquer ou incorporer par tous moyens appropriés sur un support quelconque une séquence de m paquets d'emplacement(s) de caractères ou signes, groupés les uns à la suite des autres et de même longueur et comportant chacun un même nombre n d'emplacements occupés en totalité ou non par l'un de p caractères ou signes prédéterminés identifiables chacun à l'aide d'un ou plusieurs éléments signifiants, chaque combinaison de ces p caractères ou signes dans un paquet correspondant, selon une loi de codage prédéterminée, à un nombre, une lettre ou signe, ou groupe de lettres ou signes quelconques, ladite loi de codage étant telle que dans n'importe quel paquet l'emplacement de rang q soit occupé par un caractère ou signe présentant un élément signifiant situé toujours au même endroit à l'intérieur dudit paquet, la succession régulière dans ladite séquence desdits éléments signifiants de $q^{ième}$ rang déterminant ainsi un rythme d'horloge dit horloge codée, cependant que les éléments signifiants des autres rangs constituent le contenu informatif de ladite séquence, et, d'autre part, à restituer l'information codée dans ladite séquence en lisant d'un bout à l'autre la séquence de façon à détecter et positionner dans le temps tous les éléments signifiants de tous les caractères ou signes, en comparant un étalon de temps dit horloge étalon correspondant à ladite horloge codée, à la succession d'éléments signifiants lue, de manière itérative jusqu'à trouver la coïncidence entre les horloges codée et étalon, puis en décodant ledit contenu informatif de la séquence dont les paquets successifs sont ainsi rigoureusement calés dans l'échelle de temps définie par l'horloge étalon.

De préférence les p caractères sont choisis parmi les lettres d'un alphabet et plus précisément celles susceptibles d'être individualisées à partir d'un élément signifiant aisément identifiable par le système de lecture et que l'on retrouve dans chacune des p lettres choisies.

A l'intérieur de chaque paquet de la séquence les éléments signifiants des diverses lettres sont susceptibles d'occuper des emplacements régulièrement espacés et caractérisés par leur rang.

L'horloge codée peut être calée sur les éléments signifiants se trouvant au premier rang, c'est-à-dire ceux que l'on rencontre en premier dans chaque paquet, auquel cas bien entendu un tel élément signifiant doit se trouver au premier rang de chaque paquet de la séquence, mais l'horloge codée peut être également calée sur les éléments signifiants d'un autre rang.

Afin de bien expliquer le procédé de l'invention on va décrire ci-après un mode de mise en oeuvre en référence aux dessins annexés sur lesquels :

- Figure 1a illustre un exemple de codage selon l'invention;

- Figure 1b illustre l'échelle de temps définie par l'horloge codée intégrée au code de la figure 1a ;

- Figure 1c représente les positions possibles dans un paquet des éléments signifiants des lettres de codage choisies ;

- Figure 1d représente les signaux de lecture du code de la figure 1a ;

Figure 1e représente un mode de codage des chiffres 0 à 7 par le système illustré par la figure 1a ;

- Figure 1f montre les quatre types d'écarts entre éléments signifiants dans le système illustré par la figure 1a ;

- Figure 1g montre le positionnement dans le temps, à l'intérieur d'une unité de temps de l'horloge codée, des éléments signifiants possibles ;

- Figures 2a à 2c illustrent divers modes de lecture d'une information codée du type de la figure 1a ;

- Figure 3 représente schématiquement un mode de réalisation de l'ensemble d'un système de lecture apte à traiter les informations conformément à l'invention;

- Figure 4 illustre une variante de réalisation du dispositif de la figure 3 ;

- Figure 5 représente un organigramme de traitement numérique des signaux de lecture en vue d'établir la coïncidence entre horloge codée et horloge étalon, et

- Figure 6 illustre un type de signe utilisable dans le procédé de l'invention.

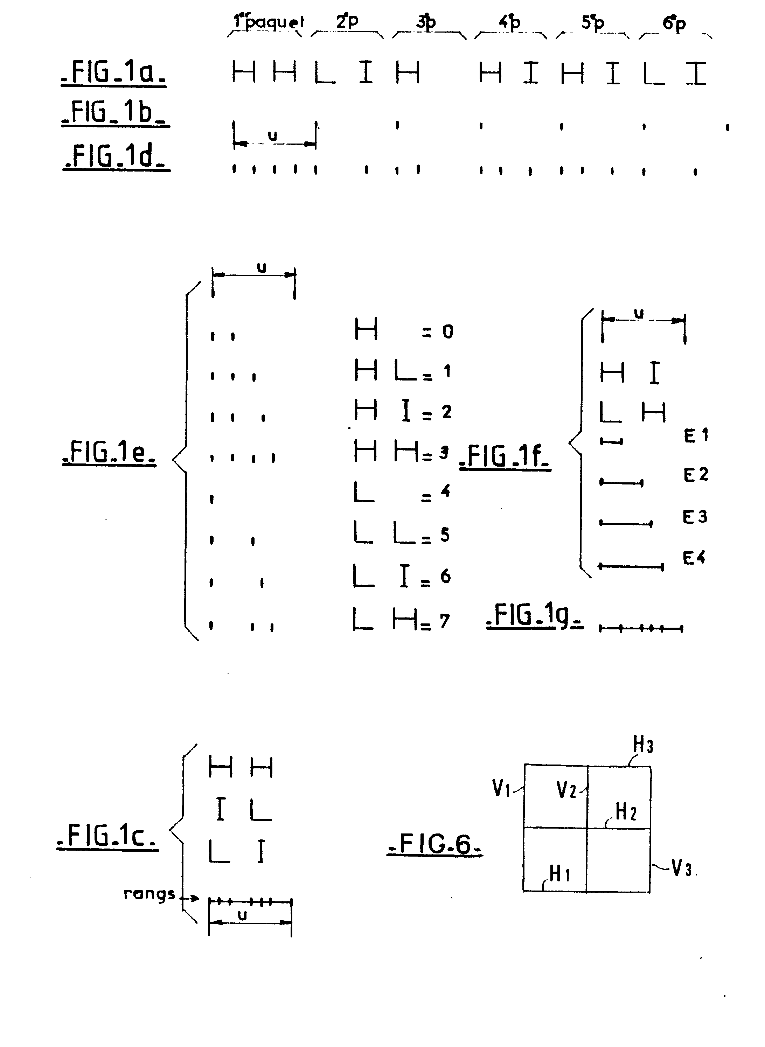

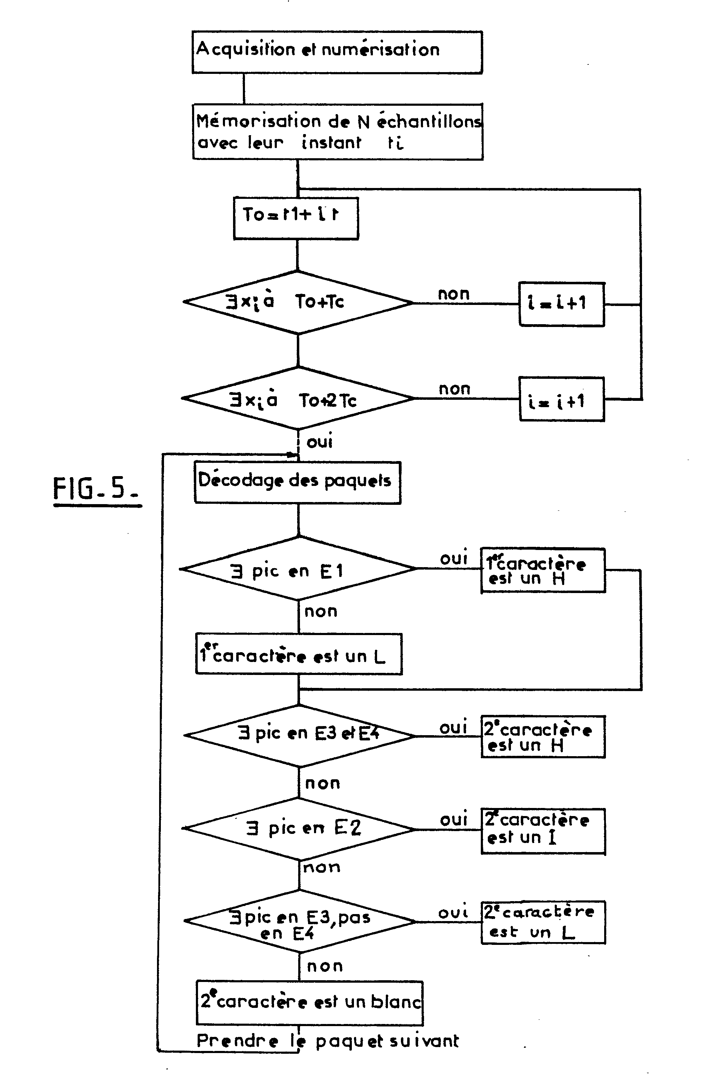

Dans l'exemple illustré par la figure 1a on a représenté une séquence de six paquets successifs de deux emplacements possibles, soit d'un blanc, soit de l'une des lettres choisies dans le groupe formé par les trois lettres majuscules H,I et L de l'alphabet latin.

Certains groupes (1er,2ème,4ème,5ème,6ème) comportent deux lettres, l'un (3ème) n'en comportant qu'une.

Ces lettres ont été choisies parce que l'on peut les individualiser aisément à la lecture par un élément signifiant constitué par une barre verticale présente à la fois dans le H, le I et le L.

L'information codée de la figure 1a intègre sa propre horloge de lecture ou horloge codée représentée en figure 1b par une succession de tops régulièrement répartis le long de la séquence codée et calés sur les éléments signifiants se trouvant au premier rang de chaque paquet. Sur la figure 1a on constate en effet que le premier emplacement de lettre dans chaque paquet est occupé par une lettre (H ou L) comportant un élément signifiant (barre verticale) en premier rang.

Compte tenu des lettres choisies et du fait que chaque paquet comporte deux emplacements possibles de lettres, la figure 1c illustre à l'intérieur de l'unité de temps u de l'horloge codée de la figure 1b les emplacements possibles

ou rangs des éléments signifiants des diverses combinaisons possibles de lettres. On voit ainsi qu'il y a six rangs pour les éléments signifiants, ceux de la lettre I se trouvant en 2ème et 5ème rang.

Du fait que dans l'exemple de la figure 1a il a été choisi (arbitrairement) de caler l'horloge codée sur le premier rang il est par suite nécessaire que chaque paquet comporte, en premier emplacement de lettre, soit un H, soit un L. S'il avait été choisi de caler ladite horloge sur le second rang, chaque paquet aurait comporté un I en premier emplacement de lettre, l'autre emplacement comportant un H, un I, un L ou un blanc.

La figure 1d représente les tops de lecture de tous les éléments signifiants de l'information codée de la figure 1a.

La figure 1e illustre un mode de codage possible parmi d'autres des chiffres 0 à 7 par une combinaison d'un H ou un L avec l'une des trois lettres H,I,L ou un blanc, ce codage s'appliquant au cas de l'horloge codée calée sur les éléments signifiants de premier rang tel qu'illustré par les figures 1a et 1b.

La figure 1f illustre les quatre écarts différents E1 à E4 entre éléments signifiants susceptibles d'être lus dans un paquet et permettant de discriminer les H,I et L dans le temps le long de l'échelle de lecture (figure 1d) de l'information codée de la figure 1a.

Cette lecture s'effectue, conformément à l'invention, de la manière suivante.

Dans le système de lecture on va générer une horloge étalon définissant une échelle des temps dont l'unité est égale à l'unité u de l'horloge codée. L'information codée de la figure 1a est portée par un support quelconque et les premières lettres de chaque paquet sont réparties dans l'espace à intervalles réguliers, ce qui est le cas si les lettres sont par exemple tapées à la machine ou imprimées. L'horloge codée est donc constante.

Pour que cette horloge codée soit lue correctement il faut donc que la vitesse de lecture soit constante et déterminée. S'il en était autrement il suffirait de connaître la vitesse ou sa loi de variation pour corriger la lecture afin de retrouver une horloge codée correspondant à l'horloge étalon.

Cela peut se faire par exemple en prévoyant un codeur incrémental dans un dispositif de lecture analogique de l'information codée selon la figure 1a.

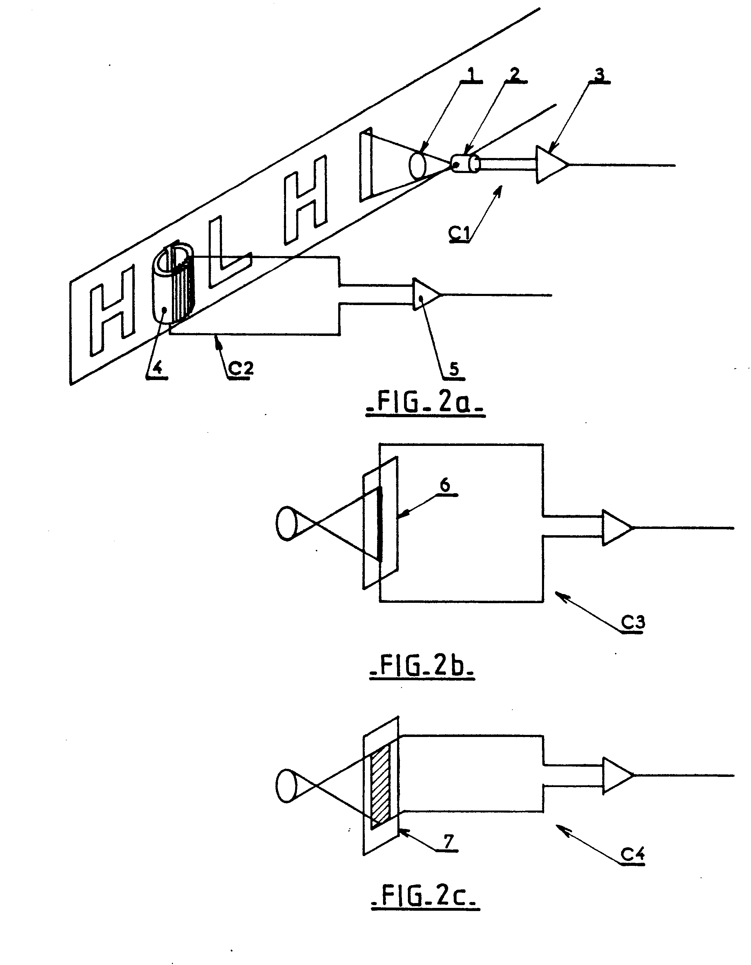

La figure 2a illustre deux exemples de dispositifs de lecture délivrant un signal analogique à chaque passage d'un élément signifiant devant un détecteur.

Sur cette figure 2a on a représenté en C1 un capteur optique ponctuel capable de lire la présence d'une barre verticale par différence d'éclairement entre cette barre et l'environnement. Chaque barre verticale se trouvant dans le champ du capteur C1 est projetée par une optique appropriée 1 sous forme d'un point sur un photodétecteur 2 générant par l'intermédiaire d'un amplificateur 3 un signal analogique. Le passage devant le photodétecteur 2 d'une barre horizontale se traduit par un signal lumineux inférieur au seuil de déclenchement en sorte que seules les barres verticales ou éléments signifiants de l'information lue sont pris en compte.

En C2 on a schématisé un capteur magnétique symbolisé par une bobine magnétique à noyau ouvert 4 définissant un entrefer vertical correspondant aux barres verticales de l'information codée, les lettres de celle-ci étant bien entendu imprimées avec une encre magnétique.

La bobine 4 est reliée à un amplificateur 5 délivrant un signal analogique.

Les figures 2b et 2c représentent des variantes du capteur optique C1. Le capteur C3 de la figure 2b est un capteur linéaire, l'image sur l'élément photosensible 6 étant un trait vertical correspondant à la barre verticale se trouvant devant le capteur. Le capteur C4 de la figure 2c est un capteur bidimensionnel, l'image sur l'élément photosensible 7 étant un rectangle correspondant à la barre verticale se trouvant devant le capteur.

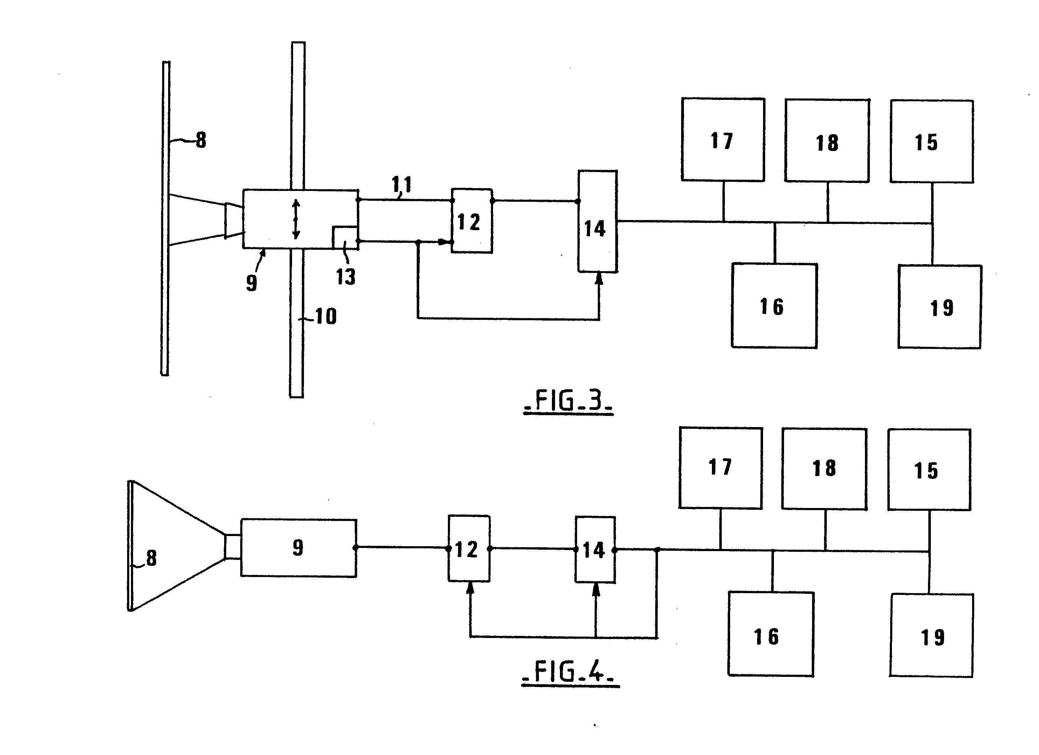

La figure 3 illustre le schéma général d'un mode de réalisation d'un système de lecture apte à traiter l'information codée conformément à l'invention.

Plus précisément, la figure 3 illustre le cas de la lecture d'un message codé conformément à l'invention, symbolisé en 8 et lu par exploration progressive par déplacement mutuel entre le message 8 porté par un support quelconque et un capteur optique constitué ici par exemple par une caméra 9.

Sur la figure 3 c'est la caméra 9 qui se déplace parallèlement au message 8 le long d'un rail de guidage symbolisé en 10, mais ce pourrait bien entendu être le contraire, la caméra 9 étant fixe et le message 8 défilant devant elle.

La caméra 9 délivre, par une connexion 11, à un dispositif de numérisation 12 des signaux de lecture du message 8 au cours du déplacement de la caméra 9 le long du rail 10 par des moyens conventionnels non représentés. La caméra 9 est munie par ailleurs d'un codeur incrémental 13 constituant une horloge de lecture permettant de lire correctement l'horloge codée portée par le message 8 quelle que soit la vitesse de déplacement de la caméra 9 par rapport audit message.

Le codeur 13 délivre donc des signaux d'horloge au dispositif de numérisation 12 ainsi qu'à un dispositif interface 14 interposé entre le dispositif de numérisation 12 et l'unité de traitement et d'affichage des informations.

Cette unité comprend un organe intelligent tel qu'un micro-processeur 15, une horloge interne 16, une mémoire vive 17, une mémoire morte 18 et une console de visualisation et d'affichage 19 munie d'un dispositif de décodage permettant de restituer en clair le message lu.

La figure 4 illustre une variante de réalisation correspondant au cas ou il n'y a pas de déplacement relatif entre la caméra 9 et le message 8, celui-ci se trouvant en totalité dans le champ de la caméra.

Suivant cette variante, il n'est pas nécessaire de prévoir un codeur incrémental, le rythme de lecture du message étant généré par le système (15,16) et appliqué aux dispositifs 12 et 14 pour échantillonner convenablement les signaux provenant de la caméra 9.

Il est à noter que dans les cas d'un déplacement relatif entre la caméra 9 et le message 8, si la vitesse de lecture est connue et parfaitement constante, le codeur 13 est inutile, le système (15,16) définissant l'horloge de lecture assurant l'échantillonnage convenable des signaux provenant de la caméra.

La figure 5 représente un organigramme du traitement logique, effectué sous la commande de l'organe intelligent 15 du système de lecture de la figure 3, des signaux numériques générés par le dispositif de numérisation 12 et correspondant par exemple à la séquence de lecture de l'information de la figure 1a, illustrée par la figure 1d.

On a vu lors de la description de la figure 3 que le système de lecture comporte une horloge de lecture permettant d'échantillonner les signaux de lecture de la figure 1d, c'est à-dire de déterminer les écarts E1 à E4 et donc de discriminer les lettres H,I,L ainsi que les blancs.

Le processus de traitement desdits signaux de lecture consiste à faire "glisser" l'horloge étalon mémorisée dans le système de lecture le long de l'axe des temps défini par l'horloge de lecture et à comparer de manière itérative l'horloge étalon avec la succession des signaux de lecture jusqu'à trouver une coïncidence entre chaque top de l'horloge étalon et un top de lecture, une telle coïncidence étant illustrée par les deux figures 1b,1d. Cette coïncidence est la clé du décodage et est la seule possible comme on peut le constater en considérant les figures 1b,1d. En effet, si l'on décale le premier top de l'échelle de la figure 1b pour le faire coïncider avec le 2ème, le 3ème ou le 4ème top de l'échelle de la figure 1d on constate qu'en regard de tous les autres tops de la figure 1b, il n'y a pas systématiquement un top en coïncidence de la figure 1d. Bien entendu, dans le cas simple de la figure 1a il n'y a pas d'essais de coïncidence itératifs à effectuer dans la mesure ou l'on fait coïncider au départ le premier top de l'horloge étalon et le premier signal de lecture, la coïncidence étant ipso facto établie, mais ce n'est pas le cas si l'élément signifiant de l'horloge codée n'est pas celui du premier rang dans chaque paquet.

Une fois la coïncidence obtenue entre l'horloge codée et l'horloge étalon, le contenu des paquets successifs de la séquence est alors analysé et décodé grâce à la détermination desdits écarts E1 à E4 (figure 1f) et l'information décodée est affichée en clair en 19.

C'est l'ensemble des opérations ci-dessus qui est représenté sous forme de programme sur la figure 4.

Selon ce programme, on effectue l'acquisition et la numérisation, puis la mémorisation, de N échantillons (tops de lecture) avec leur instants $t_i$ le long de l'échelle des temps fournie par l'horloge de lecture. Après cette mémorisation, on effectue la recherche des paquets, l'horloge codée Tc des paquets étant connue. La boucle de décodage des paquets assure la recherche de la convergence sur x paquets et permet de connaître la nature du premier et du second caractère de chaque paquet.

Dans l'exemple décrit en référence à la figure 1a, chaque paquet comporte deux lettres ou emplacements de lettre, mais il peut comporter une seule lettre ou emplacement, ou, au contraire, un nombre supérieur à deux. Les lettres H,I et L sont faciles à identifier et caractériser à l'aide d'un élément signifiant formé par une barre verticale, mais d'autres lettres de l'alphabet latin peuvent être choisies à partir d'un ou plusieurs éléments signifiants différents. Des lettres d'un autre alphabet et, d'une manière générale des signes quelconques, conventionnels ou non, peuvent être choisis pourvu qu'ils aient en commun au moins un élément signifiant identifiable de manière simple, sûre et non équivoque.

C'est ainsi que conformément à l'invention on peut utiliser un signe formé ou non par un caractère d'un alphabet et comportant plusieurs barres verticales constituant plusieurs éléments signifiants ayant un contenu informatif différent selon leur position dans le signe. Ce même signe peut comporter, en outre, une ou plusieurs barres horizontales constituant encore d'autres éléments signifiants ayant eux aussi un contenu informatif différent selon leur position dans le signe. La figure 6 illustre un tel signe constitué d'un carré divisé en quatre petits carrés.

Dans ce signe on dénombre trois barres verticales V1, V2, V3, de la gauche vers la droite et trois barres horizontales H1,H2,H3.

Si l'on suppose qu'un tel signe est utilisé dans une séquence de paquets comportant chacun un seul signe, l'horloge codée sera calée sur l'élément signifiant vertical - (dit élément signifiant d'horloge) de premier rang (V1) ou de second rang (V2) ou de troisième rang (V3), ou bien sur l'un des éléments signifiants horizontaux de 1er, 2ème ou 3ème rang (H1,H2,H3), les autres éléments signifiants - (jusqu'à cinq dans un signe tel que celui de la figure 6) portant l'information codée. Il est à noter que seule la position des barres verticales ou horizontales dans le signe est signifiante et non la longueur desdites barres qui peut varier comme par exemple dans le cas des deux barres horizontales de la lettre F.

Avec une séquence de paquets formés d'un seul signe il est nécessaire que les divers signes utilisés aient tous un élément signifiant d'horloge positionné spatialement identiquement, les signes se différenciant par le nombre et la position spatiale des autres éléments signifiants affectés au contenu informatif.

On peut faire ainsi passer beaucoup plus d'informations pour un nombre réduit de signes dans la séquence utile.

L'utilisation de signes d'un alphabet courant présente le grand avantage de rendre l'application de l'information codée sur son support particulièrement simple et peu coûteuse, celle-ci se faisant par impression ou à la machine à écrire tout simplement à condition d'utiliser un capteur optique de lecture par différence d'éclairement entre les caractères imprimés et le fond du support.

**Revendications**

1. Procédé de transmission d'informations codées, caractérisé en ce qu'il consiste, d'une part, à appliquer ou incorporer par tous moyens appropriés sur un support quelconque une séquence de m paquets d'emplacement(s) de caractères ou signes, groupés les uns à la suite des autres et de même longueur et comportant chacun un même nombre n d'emplacements occupés en totalité ou non par l'un de p caractères ou signes prédéterminés identifiables chacun à l'aide d'un ou plusieurs éléments signifiants, chaque combinaison de ces p caractères ou signes dans un paquet correspondant, selon une loi de codage prédéterminée, à un nombre, une lettre ou signe, ou groupe de lettres ou signes quelconques, ladite loi de codage étant telle que dans n'importe quel paquet l'emplacement de rang q soit occupé par un caractère ou signe présentant un élément signifiant situé toujours au même endroit à l'intérieur dudit paquet, la succession régulière dans ladite séquence desdits éléments signifiants de $q^{ième}$ rang déterminant ainsi un rythme d'horloge dit horloge codée, cependant que les éléments signifiants des autres rangs constituent le contenu informatif de ladite séquence, et, d'autre part, à restituer l'information codée dans ladite séquence en lisant d'un bout à l'autre la séquence de façon à détecter et positionner dans le temps tous les éléments signifiants de tous les caractères ou signes, en comparant un étalon de temps dit horloge étalon correspondant à ladite horloge codée, à la succession d'éléments signifiants lue, de manière itérative jusqu'à trouver la coïncidence entre les horloges codée et étalon, puis en décodant ledit contenu informatif de la séquence dont les paquets successifs sont ainsi rigoureusement calés dans l'échelle de temps définie par l'horloge étalon.

2. Procédé suivant la revendication 1, caractérisé en ce que les p caractères sont choisis parmi les lettres d'un alphabet et plus précisément celles susceptibles d'être individualisées à partir d'un élément signifiant aisément identifiable par le système de lecture et que l'on retrouve dans chacune des p lettres choisies.

3. Procédé suivant la revendication 2, caractérisé en ce que ledit élément signifiant est une barre verticale et/ou horizontale.

4. Procédé suivant la revendication 2 ou 3, caractérisé en ce qu' à l'intérieur de chaque paquet de la séquence les éléments signifiants des diverses lettres sont susceptibles d'occuper des emplacements régulièrement espacés et caractérisés par leur rang.

5. Procédé suivant l'une des revendications 1 à 4, caractérisé en ce que chaque paquet comporte au moins deux emplacements possibles, soit d'un blanc, soit d'un signe ou caractère choisi dans un groupe prédéterminé de signes ou caractères en fonction des caractéristiques du ou des éléments signifiants choisis.

6. Procédé suivant la revendication 1, caractérisé en ce que le nombre n d'emplacements dans chaque paquet est égal à 1, chaque emplacement étant occupé par un signe ou caractère choisi dans un groupe prédéterminé de signes ou caractères tous présentant un élément signifiant dit d'horloge positionné spatialement identiquement et tous identifiables par au moins un autre élément signifiant.

7. Dispositif de lecture pour la mise en oeuvre du procédé selon l'une quelconque des revendications 1 à 6, caractérisé en ce qu'il est constitué d'un capteur (9) susceptible de délivrer sous forme analogique des signaux de lecture des éléments signifiants du message à décoder (8), un dispositif de numérisation (12) relié audit capteur (9), un dispositif d'interfaçage (14) interposé entre le dispositif de numérisation (12) et un ensemble de traitement de données comprenant un microprocesseur (15), une horloge interne (16), des mémoires vive et morte (17,18) et un dispositif d'affichage et visualisation (19) muni d'un circuit de décodage afin d'afficher en clair le message lu.

8. Dispositif suivant la revendication 7, caractérisé en ce que ledit capteur (9) est une caméra.

9. Dispositif suivant la revendication 7 ou 8, caractérisé en ce que le micro-processeur (15) adresse auxdits dispositifs de numérisation (12) et d'interfaçage (14) des signaux d'horloge de lecture chargés d'échantillonner les signaux de lecture délivrés par ledit capteur (9).

10. Dispositif suivant la revendication 7 ou 8, caractérisé en ce que, dans le cas de la lecture du message codé (8) par déplacement relatif entre ce dernier et le capteur (9), celui-ci est muni d'un codeur incrémental (13) adressant auxdits dispositifs de numérisation (12) et d'interfaçage (14) des signaux d'horloge de lecture chargés d'échantillonner les signaux de lecture délivrés par ledit capteur (9).

.FIG.1a. .FIG.1b. .FIG.1d. .FIG.1e. .FIG.1f. .FIG.1g. .FIG.1c. .FIG.6.

Acquisition et numérisation

Mémorisation de N échantillons avec leur instant $t_i$

$To = t1 + i t$

$\exists x_i$ à $To+Tc$ — non — $i = i+1$

$\exists x_i$ à $To+2Tc$ — non — $i = i+1$

oui

**FIG. 5.**

Décodage des paquets

$\exists$ pic en E1 — oui — 1er caractère est un H

non

1er caractère est un L

$\exists$ pic en E3 et E4 — oui — 2e caractère est un H

non

$\exists$ pic en E2 — oui — 2e caractère est un I

non

$\exists$ pic en E3, pas en E4 — oui — 2e caractère est un L

non

2e caractère est un blanc

Prendre le paquet suivant

0 192 595

.FIG.2a.

.FIG.2b.

.FIG.2c.

.FIG.3.

.FIG.4.

0 192 595

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | US-A-3 588 457 (BIJLEVELD et al.) <br> * Figures 1,3; colonne 4, lignes 13-75; colonne 5, lignes 36-75 * | 1,5 | G 06 K   19/06 <br> G 06 K    7/016 |
| A | | 3,4 | |
| | --- | | |
| Y | IBM TECHNICAL DISCLOSURE BULLETIN, vol. 26, no. 1, juin 1983, pages 135-144, New York, US; M.C. NIELSON: "Word processing bar code" <br> * Page  135, ligne 1 - page 138, ligne 3 * | 1,5 | |
| | --- | | |
| Y | US-A-4 125 765 (COWARDIN et al.) <br> * Figures 1-6; colonne 2, ligne 1 - colonne 7, ligne 24 * | 1,5 | DOMAINES TECHNIQUES RECHERCHES (Int Cl 4) |
| A | | 10 | G 06 K |
| | --- | | |
| A | US-A-4 286 146 (UNO et al.) <br> * Résumé; figures 8-10; colonne 5, ligne 18 - colonne 6, ligne 65 * | 6-9 | |
| | --- | | |
| A | WO-A-8 002 758 (BLANFORD et al.) <br> * Figures 6,7; page 12, ligne 29 - page 14, ligne 14 * | 1,7 | |
| | ----- | | |

Le present rapport de recherche a ete etabli pour toutes les revendications

| Lieu de la recherche <br> LA HAYE | Date d achevement de la recherche <br> 13-05-1986 | Examinateur <br> FORLEN G.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l invention
E : document de brevet antérieur, mais publié à la date de dépôt ou après cette date
D : cité dans la demande
L : cité pour d autres raisons

& : membre de la même famille, document correspondant

OEB Form 1503 03 82